# EUROPEAN PATENT APPLICATION

(11) **EP 3 660 549 A1**
(43) Date of publication of application: **03.06.2020**
(21) Application number: 18839307.8
(22) Date of filing: 19.07.2018
(51) Int. Cl.: G02B 3/00, B29C 33/42, G02B 3/08

(54) **OPTICAL COMPONENT AND METHOD FOR MANUFACTURING SAME**

(30) Priority: 26.07.2017 JP 2017144150
(71) Applicant: Daicel Corporation, Osaka-shi, Osaka 530-0011 (JP)
(72) Inventor: FUJIKAWA, Takeshi, Tokyo 108-8230 (JP); FUKUI, Sadayuki, Tokyo 108-8230 (JP)
(74) Representative: Grünecker Patent- und Rechtsanwälte PartG mbB
(86) International application number: PCT/JP2018/027108
(87) International publication number: WO 2019/021931

(57) **Abstract**

Provided is an optical component whereby the absence of eccentricity can be instantly confirmed visually even in a case that the optical component has Fresnel lens or other very fine structure. An optical component of the present invention includes an optical part and a peripheral part thereof. The optical component includes recognition marks in positions substantially plane-symmetrical to each other on a front surface side and a rear surface side of the peripheral part, the recognition marks being expressed as a recess or a projection and configured to allow eccentricity to be recognized. Two of the recognition marks are preferably similar to each other in shape, one recognition mark being preferably from 10% to 90% the size of the other recognition mark.

## Description

### Technical Field

The present invention relates to an optical component such as an imaging lens or a light diffusion lens, and a method for manufacturing the same. The present application claims priority to JP 2017-144150 filed to Japan on July 26, 2017, the content of which is incorporated herein.

### Background Art

A large number of lenses such as an imaging lens and a light diffusion lens are manufactured by molding a thermoplastic resin, a thermosetting resin, or a photocurable resin using a mold; however, it is known that these resins shrink or expand when cured. Distortion occurs in the shape due to shrinkage or expansion of the resin caused when the resin is cured, and the lens where the eccentricity occurs is mixed at a certain proportion. In addition, in a case that a mold having a two-part configuration of the upper mold and the lower mold as a mold for molding is used, as a result of that the lens becomes thinner and smaller, an adjustment work for which the upper mold and the lower mold are accurately closed becomes a very precise work. And, even if a slight shift occurs between the upper mold and the lower mold, eccentricity occurs in an obtained lens.

The lens on which the eccentricity occurs does not have desired optical characteristics, thus it is necessary to find out and eliminate the lens from many lenses. Here, as a method for detecting the eccentricity of the lens, a method is known in which light is caused to pass through a lens, and the eccentricity is detected from the way of the light bending, or a method is known in which the both sides of a lens are physically measured, and the center values of them are compared with each other. For example, Patent Document 1 describes that the amount of eccentricity is measured by using a laser probe non-contact three-dimensional measurement apparatus. However, in these methods, since it is necessary to use an expensive apparatus, cost increases, and in the case of the thinner and smaller lens (especially Fresnel lens having a fine structure), it is very difficult to subject the lens to each detection process, in addition, it takes time, thus, there is a problem that workability is significantly reduced.

### Citation List

### Patent Document

Patent Document 1: WO 2007/018118

### Summary of Invention

### Technical Problem

If the eccentricity of the lens can be visually detected, the cost and time required for the detection process can be reduced; however, it is problematic that variations in judgment occurs depending on person, and especially, in the case of a lens having a fine structure (e.g., the Fresnel lens), this inhibits visual detection.

Therefore, an object of the present invention is to provide an optical component configured to allow the presence of eccentricity to be instantly confirmed even in a case where the optical component has a fine structure such as a Fresnel lens.

Another object of the present invention is to provide a method for manufacturing an optical component in which an occurrence of the eccentricity can be suppressed even in a case where the optical component has a fine structure such as a Fresnel lens, and in a case that the eccentricity occurs, the eccentricity can be instantly detected and eliminated visually, and the optical component with excellent optical characteristics can be selectively manufactured.

### Solution to Problem

As a result of diligent research to solve the problems described above, the present inventors discovered the following results.

For an optical component including an optical part and a peripheral part thereof, when a curable composition is subjected to molding by a mold to manufacture the optical component, and a mold is used that has a two-part configuration of an upper mold and a lower mold and is designed such that recognition marks expressed as a recess or a projection are formed respectively in positions plane-symmetrical to each other on a front surface side and a rear surface side of the peripheral part, the molds can be quickly and accurately closed without causing a shift by closing the upper mold and the lower mold such that the recognition marks are aligned with each other.

In a case that distortion due to shrinking or expanding of a curable composition caused when the curable composition is cured does not occur, an optical component is obtained in which the recognition marks of the front surface side and the rear surface side do not cause a positional shift, and the recognition marks are in positions that are substantially plane-symmetrical.

However, in a case that the distortion due to shrinking or expanding of a curable composition caused when the curable composition is cured occurs, an optical component is obtained in which the positional shift occurs between the recognition marks of the front surface side and the rear surface side, thus it is possible to detect a lens in which eccentricity due to the occurrence of the distortion occurs easily, quickly, and even visually.

Even in a case where the lens has a fine structure, by finding presence or absence of the positional shift between the recognition marks formed in the peripheral part, it is possible to determine whether the eccentricity occurs in the optical part. The present invention has been completed based on these findings.

That is, the present invention provides an optical component including an optical part and a peripheral part thereof, wherein the optical component includes recognition marks in positions substantially plane-symmetrical to each other on a front surface side and a rear surface side of the peripheral part, respectively, the recognition marks being expressed as a recess or a projection and configured to allow eccentricity to be recognized.

The present invention also provides the optical component described above, wherein two of the recognition marks on the front surface side and the rear surface side of the peripheral part are preferably similar to each other in shape, and one of the recognition marks is preferably from 10% to 90% a size of the other of the recognition marks.

The present invention also provides the optical component described above, wherein the recognition marks have a circular shape or a polygonal shape in a plan view.

The present invention also provides the optical component described above, wherein the optical part is a lens.

The present invention also provides the optical component described above, wherein the optical component is an imaging lens, a light diffusion lens, or a prism.

The present invention also provides the optical component described above, wherein the optical component is composed of a cured product of a cationic curable composition containing an epoxy resin.

The present invention also provides a method for manufacturing an optical component, the method including integrally molding a curable composition using a mold having a shape in which a recess or a projection of the following optical component is inverted, and sorting an optical component having eccentricity within a reference value from optical components obtained by the integrally molding.

The optical component includes an optical part and a peripheral part of the optical part, and includes recognition marks in positions plane-symmetrical to each other on a front surface side and a rear surface side of the peripheral part, respectively, the recognition marks being expressed as the recess or the projection.

### Advantageous Effects of Invention

An optical component of the present invention includes an optical part and a peripheral part thereof. Furthermore, the optical component includes recognition marks on a front surface side and a rear surface side of the peripheral part, and these two recognition marks are present in positions that are substantially plane-symmetrical. This indicates that when closing an upper mold and a lower mold of a mold, they can be accurately closed without causing a shift; when a curable composition which is a material for forming the optical component is cured, distortion does not occur; and the optical component has excellent optical characteristics without eccentricity (or with the eccentricity within the reference value).

In addition, in a case that the optical component of the present invention is composed of a cured product of a cationic curable composition containing an epoxy resin as the curable composition, the optical component is excellent in transparency and heat resistance, and can be mounted on a circuit board by a reflow soldering (especially, lead-free soldering), and an optical device equipped with the optical component can be manufactured with excellent working efficiency. Furthermore, the optical component can also be used in an electronic device for an automobile for which high heat resistance is required.

The optical component of the present invention can be suitably used as, for example, a lens for a sensor or a lens for a camera for a mobile electronic device such as a mobile phone or a smart phone.

In addition, according to the manufacturing method of the present invention, the upper mold and the lower mold of the mold can be easily and accurately closed by using the recognition marks as a mark to close the molds, thus, it is possible to prevent the eccentricity caused by the molds being closed while shifted from each other. Moreover, the occurrence of the positional shift between the two recognition marks formed on the front surface side and the rear surface side of the peripheral part of the optical component obtained can be confirmed by visual inspection or the like, this allows the eccentricity of the optical component to be detected instantly. As a result, the cost and time spent in the detection of the eccentricity of the optical component in the related art can be greatly reduced, and high quality optical components can be sorted and provided.

### Brief Description of Drawings

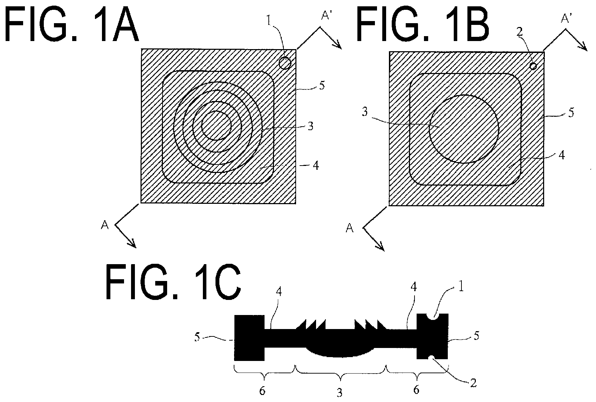

FIG. 1 includes schematic plan views (a front surface side (a) and a rear surface side (b)) illustrating an example of an optical component of the present invention and a schematic cross-sectional view (c) at a position of A-A' of the optical component.

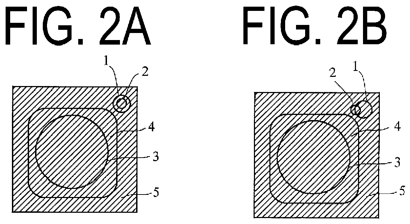

FIG. 2 includes a schematic diagram (a) of a case where recognition marks are plane-symmetrical in a case that the optical component of the present invention is viewed from directly above and a schematic diagram (b) of a case where a positional shift occurs between the recognition marks.

### Description of Embodiments

### Optical Component

An optical component of the present invention is constituted by an optical part and a peripheral part thereof, and includes recognition marks in positions substantially plane-symmetrical to each other on a front surface side and a rear surface side of the peripheral part, respectively, the recognition marks being expressed as a recess or a projection and configured to allow eccentricity to be recognized. "The recognition marks are present in positions that are substantially plane-symmetrical" means that when the upper mold and the lower mold of the mold are closed, they can be closed accurately without a shift, and distortion does not occur during curing. This shows that the eccentricity does not occur or is suppressed to be very small, and there is no displacement in an optical axis.

The shape of the recognition mark in the plan view is not especially limited to a specific shape, but it is preferable that the recognition mark be easily formed and the presence or absence of eccentricity be easily confirmed, and it is preferable that the recognition mark have a polygonal shape (triangular, quadrangular (square, rectangular), and the like), or a circular shape, for example. In addition, the recognition mark may also include a line (e.g., secant line and the like.) passing through the center point. In a case that the line is disposed on the recognition mark (especially, by disposing the lines in directions in which the lines are orthogonal to each other when viewing the two recognition marks from directly above), the positional shift between the recognition marks can be more easily determined.

The two recognition marks are preferably similar to each other in shape from the perspective of that the eccentricity is easily detected visually. In addition, in the two recognition marks, one recognition mark is preferable to be from 10% to 90% (the size of a point included in the range from 10% to 90%) the size of the other recognition mark from the perspective of that the eccentricity is easily detected visually. In a case that the two recognition marks are the same in shape and size, it may be difficult to instantly determine the presence or absence of the eccentricity in a case that they appear completely overlapping.

The size of the recognition mark is not especially limited to a specific size, but it is preferable to be a size in which the recognition mark is included in the peripheral part and the presence or absence of the eccentricity is easily confirmed, and the diameter of the recognition mark (in a case that the recognition mark is a polygon, it is the diameter of the circumscribed circle) in a plan view (a view from directly above) is, for example, from 0.05 to 0.5 mm, and preferably from 0.05 to 0.4 mm.

For the recess or projection of the recognition mark, for example, in a case that the recognition mark is expressed as a recess, the depth of the recognition mark may preferably be, for example, in the range from 0.01 to 0.5 mm from the perspective of that the eccentricity is easily detected visually. On the other hand, in a case that the recognition mark is expressed as a projection, the height may preferably be, for example, in the range from 0.01 to 0.3 mm from the perspective of that the eccentricity is easily detected visually.

In the present invention, "the recognition marks disposed on the front surface side and the rear surface side are in the positions that are substantially plane-symmetrical to each other" indicates a case that, in a case that an optical component (a case that the optical component is formed from a transparent material) is disposed on a flat plane, and the optical component is viewed from directly above, the shift between the two recognition marks disposed on the front surface side and the rear surface side (the distance between the center points of the recognition marks) is within 30% of the diameter in a case that the recognition mark (larger recognition mark in a case that the sizes of the two recognition marks are different) has a circular shape in a plan view, and is within 30% of the diameter of the circumscribed circle in a case that the recognition mark has a polygonal shape in a plan view. Furthermore, "the positional shift occurs in the recognition marks" indicates a case that, the two recognition marks disposed on the front surface side and the rear surface side do not present in the position that are plane-symmetrical to each other, and the shift between the recognition marks (the distance between the center points of the recognition marks) is out of the above range.

Furthermore, the recognition marks of the optical component of the present invention are formed by transferring the shape of the mold when manufacturing the optical component by molding, and are not added after molding. Furthermore, the optical part, the peripheral part, and the recognition marks expressed as a recess or a projection, which are components of the optical component of the present invention, are integrally molded, and there is no seam between these components.

Further, the peripheral part may be configured by, for example, a flange part that is directly coupled to the optical part (the flange part protrudes from an outer periphery of the optical part on the same plane as the optical part and surrounds the optical part) and a frame part formed to surround the flange part (the frame part is a peripheral wall that protrudes upward from an outer periphery of the flange part and surrounds the periphery of the optical part and the flange part continuous thereto), and the recognition marks may be present in the positions where the front surface side and the rear surface side of the frame part in the peripheral part (especially, it is preferable to be one of the four corners of the frame part) are substantially plane-symmetrical to each other.

The shape of the optical component (including the optical part and the peripheral part) in a plan view (a view from directly above) is preferably rectangular, and the length of the long side (one side in a case that the shape of the optical component is a square) is, for example, from 10 to 0.5 mm, preferably from 7 to 0.5 mm. In addition, the shape of the optical part in a plan view (a view from directly above) is a shape corresponding to optical characteristics and is not especially limited to circular or rectangular, but the length of the long side or diameter (= length when measuring the widest location) is, for example, from 5 to 0.1 mm, and preferably from 4 to 0.2 mm. Further, the thickness of the thickest part of the optical component is, for example, from 3 to 0.3 mm, and the thickness of the thinnest part is from 1.5 to 0.05 mm, for example.

The optical part is preferable to be a lens part. In addition, the lens part is not especially limited, but it may preferably have a Fresnel lens shape, that is, include two or more (preferably from 2 to 100, especially preferably from 5 to 100) prisms with a mountain shape in that it can satisfy a request for being thinner.

The optical component of the present invention preferably have excellent transparency, and the light transmittance (a case that wavelength is 450 nm, and the thickness of the cured product is 100 µm) of the cured product (for example, the cured product of the curable composition described below) that is a material for forming the optical component, is preferably 70% or greater, and more preferably 80% or greater.

The optical component of the present invention preferably have excellent heat resistance, and a glass transition temperature (Tg) of a cured product (e.g., a cured product of the curable composition described below) that is a material for forming an optical component is preferably 100°C or higher.

Furthermore, in the optical component of the present invention, from the perspective of being able to suppress the occurrence of brittleness, prevent chipping and cracking, the breaking strain of the cured product (e.g., a cured product of the curable composition described below), which is the material for forming the optical component, for example, is preferably 0.1% or greater (preferably 0.3% or greater, especially preferably 0.5% or greater). Also, the upper limit of the breaking strain is, for example, 30%, preferably 20%, especially preferably 10%, most preferably 5%, most especially preferably 3%. Note that the breaking strain can be measured in accordance with JIS-K7162:1994 using a test piece 5B type.

### Method for Manufacturing Optical Component

A method for manufacturing an optical component of the present invention includes integrally molding a curable composition using a mold having a shape in which a recess or a projection of the following optical component is inverted and sorting an optical component having eccentricity within a reference value from optical components obtained by the integrally molding.

The optical component includes an optical part and a peripheral part of the optical part, and includes recognition marks in positions plane-symmetrical to each other on a front surface side and a rear surface side of the peripheral part, respectively, the recognition marks being expressed as the recess or the projection.

As the mold, in a case that a mold including a plurality of recesses in which a shape of an optical component is inverted is used, through the integrally molding, an arrayed optical component (e.g., an arrayed optical component in which a plurality of optical components are connected with a joint therebetween, and the entire shape of the optical component is a wafer shape (= thin sliced disk shape)) in which a plurality of optical components are connected with the joint therebetween is obtained. In this case, after the integrally molding, a step of singulating the arrayed optical component by dicing or the like is preferably provided.

The use of the mold, that is, the use of the recognition marks as a mark when the upper mold and the lower mold of the mold are closed can prevent the eccentricity caused when the upper and lower molds are shifted and closed, because the upper and lower molds can be accurately closed without a shift. Furthermore, in a case that distortion due to shrinking and expanding of the curable composition caused when the curable composition is cured does not occur, an optical component is obtained that includes the recognition marks of the front surface side and the rear surface side in the positions that are substantially plane-symmetrical. On the other hand, in a case that distortion occurs due to shrinking or expanding of the curable composition caused when the curable composition is cured, the optical component is obtained in which the positional shift occurs between the recognition marks on the front surface side and the rear surface side.

After integrally molding (in a case that the arrayed optical component is obtained, further, after the singulating), in the sorting the obtained optical components (sorting step), the optical component having eccentricity within a reference value is sorted. Whether the eccentricity of the optical component is within the reference value can be determined by the degree of positional shift between the recognition marks on the front surface side and the rear surface side of the optical component, and in the optical component in which the recognition marks on the front surface side and the rear surface side present in positions that are substantially plane-symmetrical, the eccentricity is within the reference value. Further, although the positional shift between the recognition marks may be detected by using a detector such as a camera or a microscope, it can be easily confirmed visually.

According to the manufacturing method of the present invention, it is possible to only select and provide the optical components having excellent optical characteristics without eccentricity (or the eccentricity being suppressed within a reference value) and including the recognition marks on the front surface side and the rear surface side in positions that are substantially plane-symmetrical, and this allows the reliability of the product to increase. Even in a case where the optical part has a fine structure such as a Fresnel lens, the occurrence of the eccentricity can be easily and quickly detected and sorted visually. In addition, the occurrence of the eccentricity can be easily determined by confirming the positional shift between the two recognition marks, and this can prevent variation in judgement depending on person from occurring. Furthermore, automation using a simple detection device is also possible.

### Curable Composition

The curable composition contains at least a curable compound. Furthermore, in addition to the curable compound, for example, one or more kinds of polymerization initiators and other components may be contained as required. The curable composition can be prepared by mixing a curing compound with a polymerization initiator or other components as required.

The curable composition preferably has a low viscosity before the heat treatment and/or the irradiation with ultraviolet light is performed from the perspective of that the filling property for the mold is excellent, the generation of bubbles can be reduced, and the optical component having excellent optical characteristics can be produced. The viscosity at 25°C and at a shear rate of 20 (1/s) is, for example, from 0.01 to 10.0 Pa·s, preferably from 0.1 to 5.0 Pa·s, especially preferably from 0.1 to 1.0 Pa·s. Note that the viscosity can be measured using a rheometer (product name "PHYSICA UDS200", available from Anton Paar).

Furthermore, the curable composition preferably has a breaking strain of the cured product of, for example, not less than 0.1% (preferably not less than 0.3%, and especially preferably not less than 0.5%). Also, the upper limit of the breaking strain is, for example, 30%, preferably 20%, especially preferably 10%, most preferably 5%, most especially preferably 3%. In a case that the breaking strain of the cured product is within the range described above, it is possible to suppress the occurrence of brittleness in the optical component, and when releasing the cured product from the mold, it is possible to prevent the cured product from chipping or cracking. That is, the curable composition has excellent mold releasability.

Furthermore, the curable composition that can be rapidly cured by performing heat treatment and/or irradiation with ultraviolet light and allows a cured product having excellent optical characteristics to be formed is preferable. In the present invention, a cationic curable composition is preferable from the perspective of having excellent curability even in the presence of oxygen, and in particular, a composition containing an epoxy resin as a cationic curable compound is preferable from the perspective of that the cured product having excellent optical characteristics (especially transparency) and having both high hardness and heat resistance can be obtained.

### Curable Compound

As an epoxy resin as a cationic curable compound, a known or related compound having one or more epoxy groups (oxirane ring) in the molecule can be used. Examples thereof include an alicyclic epoxy compound, an aromatic epoxy compound, and an aliphatic epoxy compound. In an embodiment of the present invention, among these, from the perspective of that a cured product having excellent heat resistance and transparency can be formed, a polyfunctional alicyclic epoxy compound having an alicyclic structure and having two or more epoxy groups as functional groups in a molecule is preferred.

Specific examples of the polyfunctional alicyclic epoxy compound include
(i) a compound having an epoxy group formed from two adjacent carbon atoms and an oxygen atom constituting an alicycle (that is, alicyclic epoxy group),
(ii) a compound having an epoxy group directly bonded to an alicycle through a single bond, and
(iii) a compound having an alicycle and a glycidyl group.

Examples of the compound (i) including an alicyclic epoxy group described above include compounds represented by Formula (i) below.

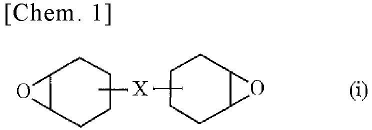

In Formula (i) above, X represents a single bond or a linking group (a divalent group having one or more atoms). Examples of the linking group include divalent hydrocarbon groups, alkenylene groups in which some or all of the carbon-carbon double bonds are epoxidized, carbonyl groups, ether bonds, ester bonds, carbonate groups, amide groups, and groups in which a plurality thereof are linked. Note that, the cyclohexene oxide group in Formula (i) may be bonded to a substituent group (for example, an alkyl group or the like).

Examples of the divalent hydrocarbon group include straight-chain or branched alkylene groups having from 1 to 18 carbons, divalent alicyclic hydrocarbon groups, and the like. Examples of the straight-chain or branched alkylene group having from 1 to 18 carbons include a methylene group, a methyl methylene group, a dimethyl methylene group, an ethylene group, a propylene group, a trimethylene group, and the like. Examples of the divalent alicyclic hydrocarbon group include cycloalkylene groups (including cycloalkylidene groups), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group, and the like.

Examples of the alkenylene group in the alkenylene group in which some or all of the carbon-carbon double bonds are epoxidized (which may be referred to as "epoxidized alkenylene group") include straight-chain or branched alkenylene groups having from 2 to 8 carbons, such as a vinylene group, a propenylene group, a 1-butenylene group, a 2-butenylene group, a butadienylene group, a pentenylene group, a hexenylene group, a heptenylene group, and an octenylene group, and the like. In particular, the epoxidized alkenylene group is preferably an alkenylene group in which all of the carbon-carbon double bonds are epoxidized; and more preferably an alkenylene group having from 2 to 4 carbons in which all of the carbon-carbon double bonds are epoxidized.

Representative examples of the compound represented by Formula (i) above include (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, 1,2-bis(3,4-epoxycyclohexan-1-yl)ethane, compounds represented by Formulas (i-1) to (i-10) below, and the like. L in Formula (i-5) below is an alkylene group having from 1 to 8 carbons, and among these, a straight-chain or branched alkylene group having from 1 to 3 carbons, such as a methylene group, an ethylene group, a propylene group, or an isopropylene group, is preferred. In Formulas (i-5), (i-7), (i-9), and (i-10) below, n¹ to n⁸ each represent an integer from 1 to 30.

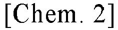

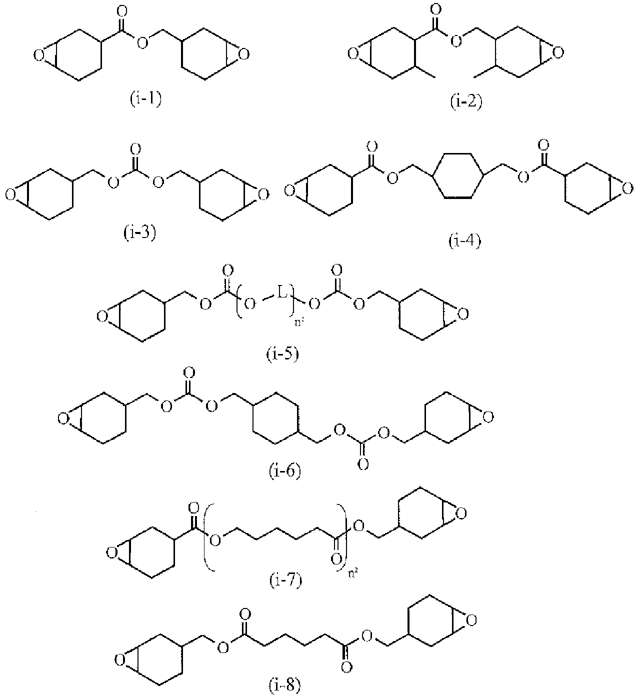

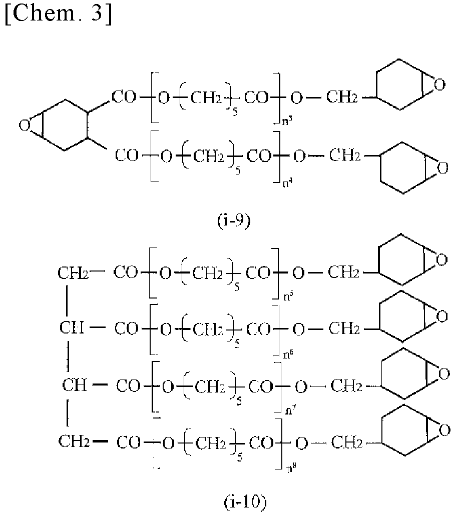

The compound (i) having an alicyclic epoxy group described above includes epoxy-modified siloxanes. Examples of the epoxy-modified siloxane include chain-like or cyclic polyorganosiloxanes each having a structural unit represented by Formula (i') below.

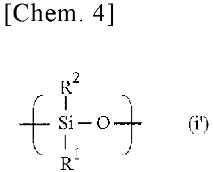

In Formula (i') above, R¹ represents a substituent containing an epoxy group represented by Formula (1a) or (1b) below, and R² represents an alkyl group or an alkoxy group.

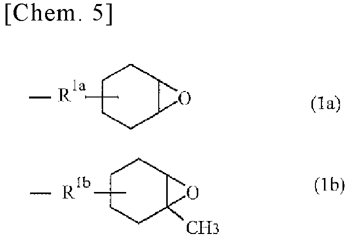

In Formulas (1a) and (1b), R^{1a} and R^{1b} may be the same or different and each represent a straight-chain or branched alkylene group, and examples thereof include straight-chain or branched alkylene groups having from 1 to 10 carbons, such as a methylene group, a methyl methylene group, a dimethyl methylene group, an ethylene group, a propylene group, a trimethylene group, a tetramethylene group, a pentamethylene group, a hexamethylene group, and a decamethylene group.

The epoxy equivalent weight (in accordance with JIS K 7236) of the epoxy-modified siloxane is, for example, from 100 to 400 and preferably from 150 to 300.

As the epoxy-modified siloxane, for example, commercially available products, such as epoxy-modified cyclic polyorganosiloxane represented by Formula (i'-1) below (trade name "X-40-2670", available from Shin-Etsu Chemical Co., Ltd.), can be used.

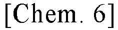

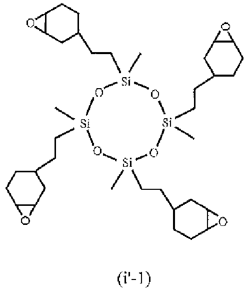

Examples of the compound (ii) having an epoxy group directly bonded to an alicycle through a single bond include compounds represented by Formula (ii) below and the like.

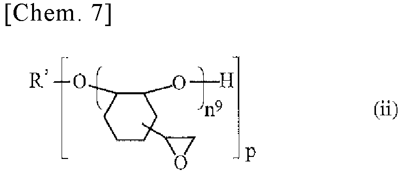

In Formula (ii), R' is a group resulting from elimination of p hydroxy groups (-OH) from a structural formula of a p-valent alcohol (p-valent organic group), where p and n⁹ each represent a natural number. Examples of the p-valent alcohol [R'-(OH)ₚ] include polyhydric alcohols (alcohols having from 1 to 15 carbons and the like), such as 2,2-bis(hydroxymethyl)-1-butanol; and the like. p is preferably from 1 to 6, and n⁹ is preferably from 1 to 30. When p is 2 or greater, n⁹ in each group in parentheses (in the outer parentheses) may be the same or different. Examples of the compound represented by Formula (ii) specifically include 1,2-epoxy-4-(2-oxiranyl)cyclohexane adduct of 2,2-bis(hydroxymethyl)-1-butanol (for example, such as the trade name "EHPE3150" (available from Daicel Corporation)).

Examples of the compound (iii) having an alicycle and a glycidyl group described above include hydrogenated bisphenol A epoxy compound, hydrogenated bisphenol F epoxy compound, hydrogenated biphenol epoxy compounds, hydrogenated phenol novolac epoxy compounds, hydrogenated cresol novolac epoxy compounds, hydrogenated cresol novolac epoxy compounds of bisphenol A, hydrogenated naphthalene epoxy compounds, and hydrogenated aromatic glycidyl ether epoxy compounds such as hydrogenated trisphenol methane epoxy compounds, and the like.

The polyfunctional alicyclic epoxy compound is preferably a compound (i) including an alicyclic epoxy group from the perspective of that a cured product having great surface hardness and excellent heat resistance and transparency is obtained, and a compound represented by Formula (i) above (especially, (3,4,3',4'-diepoxy)bicyclohexyl) is especially preferable from the perspective of that the compound has a low curing shrinkage and is difficult to cause eccentricity.

The curable composition may also contain another cationic curable compound besides the epoxy resin as the cationic curable compound and, for example, may contain an oxetane compound or a vinyl ether compound. In addition to the cationic curable compound, the curable composition may contain a radical curable compound as the curable compound.

A proportion of the epoxy resin in a total amount (100 wt.%) of the curable compound contained in the curable composition is preferably, for example, 50 wt.% or greater from the perspective of that a cured product having great surface hardness and excellent transparency can be obtained, more preferably 60 wt.% or greater, especially preferably 70 wt.% or greater, and most preferably 80 wt.% or greater. Note that the upper limit is, for example, 100 wt.% and preferably 90 wt.%.

In addition, a proportion of the compound (i) including an alicyclic epoxy group in the total amount (100 wt.%) of the curable compound contained in the curable composition is preferably, for example, 20 wt.% or greater from the perspective of that a cured product having great surface hardness and excellent transparency can be obtained, more preferably 30 wt.% or greater, and especially preferably 40 wt.% or greater. Note that the upper limit is, for example, 70 wt.% and preferably 60 wt.%.

A proportion of the compound represented by Formula (i) in the total amount (100 wt.%) of the curable compound contained in the curable composition is preferably, for example, 10 wt.% or greater from the perspective of that a cured product having great surface hardness and excellent transparency can be obtained, more preferably 15 wt.% or greater, and especially preferably 20 wt.% or greater. Note that the upper limit is, for example, 50 wt.% and preferably 40 wt.%.

### Polymerization initiator

The polymerization initiator includes a photopolymerization initiator and a thermal polymerization initiator. In the present invention, the polymerization initiator preferably includes a photopolymerization initiator from the perspective of that a cured product can be formed more quickly. Therefore, in a case that the curable composition contains a cationic curable compound, a polymerization initiator preferably contains a photocationic polymerization initiator.

The photocationic polymerization initiator is a compound that initiates curing reaction of the curable compound (especially, cationic curable compound) contained in the curable composition by generating an acid when irradiated with light and is formed from a cation moiety that absorbs light and an anion moiety that serves as a source of generation of the acid.

Examples of the photocationic polymerization initiator include diazonium salt-based compounds, iodonium salt-based compounds, sulfonium salt-based compounds, phosphonium salt-based compounds, selenium salt-based compounds, oxonium salt-based compounds, ammonium salt-based compounds, and bromine salt-based compounds.

In the present invention, among these, use of a sulfonium salt-based compound is preferred because a cured product having excellent curability can be formed. Examples of the cation moiety of the sulfonium salt-based compound include arylsulfonium ions (especially, triarylsulfonium ions), such as a (4-hydroxyphenyl)methylbenzylsulfonium ion, a triphenyl sulfonium ion, a diphenyl[4-(phenylthio)phenyl]sulfonium ion, a 4-(4-biphenylthio)phenyl-4-biphenylylphenylsulfonium ion, and a tri-p-tolylsulfonium ion.

Examples of the anion moiety of the photocationic polymerization initiator include [(Y)ₛB(Phf)₄₋ₛ]⁻ (in the formula, Y represents a phenyl group or a biphenylyl group, Phf represents a phenyl group in which at least one hydrogen atom is replaced with at least one type selected from the group consisting of a perfluoroalkyl group, a perfluoroalkoxy group, and a halogen atom, and s is an integer of 0 to 3.), BF₄⁻, [(Rf)ₜPF₆₋ₜ]⁻ (in the formula, Rf represents an alkyl group in which 80% or greater of hydrogen atoms are replaced with fluorine atoms, and t represents an integer of 0 to 5.), AsF₆⁻; SbF₆⁻; SbF₅OH⁻; and the like.

Commercially available products can be used as photocationic polymerization initiators in an embodiment of the present invention. Examples thereof include (4-hydroxyphenyl)methylbenzylsulfonium tetrakis(pentafluorophenyl)borate; 4-(4-biphenylylthio)phenyl-4-biphenylylphenylsulfonium tetrakis(pentafluorophenyl)borate; 4-(phenylthio)phenyldiphenylsulfonium phenyltris(pentafluorophenyl)borate; [4-(4-biphenylylthio)phenyl]-4-biphenylylphenylsulfonium phenyltris(pentafluorophenyl)borate; diphenyl[4-(phenylthio)phenyl]sulfonium tris(pentafluoroethyl)trifluorophosphate; diphenyl[4-(phenylthio)phenyl]sulfonium tetrakis(pentafluorophenyl)borate; diphenyl[4-(phenylthio)phenyl]sulfonium hexafluorophosphate; 4-(4-biphenylylthio)phenyl-4-biphenylylphenylsulfonium tris(pentafluoroethyl)trifluorophosphate; bis[4-(diphenylsulfonio)phenyl]sulfide phenyltris(pentafluorophenyl)borate; [4-(2-thioxanthonylthio)phenyl]phenyl-2-thioxanthonylsulfonium phenyltris(pentafluorophenyl)borate; 4-(phenylthio)phenyldiphenylsulfonium hexafluoroantimonate; the trade names "Cyracure UVI-6970", "Cyracure UVI-6974", "Cyracure UVI-6990", and "Cyracure UVI-950" (the above available from Union Carbide Corporation, USA); "Irgacure250", "Irgacure261", and "Irgacure264" (the above available from BASF Corporation); "CG-24-61" (available from Ciba-Geigy Corporation); "Optomer SP-150", "Optomer SP-151", "Optomer SP-170", and "Optomer SP-171" (the above available from ADEKA Corporation); "DAICAT II" (available from Daicel Corporation); "UVAC1590" and "UVAC1591" (the above available from Daicel-Cytec Co., Ltd.); "CI-2064", "CI-2639", "CI-2624", "CI-2481", "CI-2734", "CI-2855", "CI-2823", "CI-2758", and "CIT-1682" (the above available from Nippon Soda Co., Ltd.); "PI-2074" (tetrakis(pentafluorophenyl)borate tolylcumyliodonium salt, available from Rhodia Japan Ltd.); "FFC509" (available from 3M Company); "BBI-102", "BBI-101", "BBI-103", "MPI-103", "TPS-103", "MDS-103", "DTS-103", "NAT-103", and "NDS-103" (the above available from Midori Kagaku Co., Ltd.); "CD-1010", "CD-1011", and "CD-1012" (the above available from Sartomer Co., Ltd., USA); and"CPI-100P" and "CPI-101A" (the above available from San-Apro Ltd.).

The content of the polymerization initiator is, for example, in a range from 0.1 to 5.0 parts by weight per 100 parts by weight of the curable compound (especially, cationic curable compound) contained in the curable composition. In a case that the content of the polymerization initiator is not less than 0.1 parts by weight, excellent curability can be exhibited, and curing failure can be suppressed. In addition, in a case that the content of the polymerization initiator is not greater than 5.0 parts by weight, coloration of the cured product can be suppressed, and a cured product having excellent transparency can be formed.

### Additional Component

Examples of the other components include solvents, antioxidants, surface conditioners, photosensitizers, defoaming agents, leveling agents, coupling agents, surfactants, flame retardants, ultraviolet absorbers, and coloring agents. The content of the other components is, for example, 20 wt.% or less, preferably 10 wt.% or less, and especially preferably 5 wt.% or less, relative to the total amount of the curable composition.

As the curable composition, for example, commercially available products, such as trade name "CELVENUS OUH106" (available from Daicel Corporation), can be used.

### Mold

As the mold, it is preferable to use a silicone mold, from the perspective of excellent releasability. The silicone mold is composed of a cured product of a silicone composition. Furthermore, the mold preferably has a two-part configuration of an upper mold and a lower mold.

The mold may include a release agent with which the surface thereof is coated. Examples of the release agent include fluorine-based release agents, silicone-based release agents, and wax-based release agents. One type alone or two or more types thereof in combination can be used.

Examples of a method for molding the curable composition using a mold having a two-part configuration of the upper mold and the lower mold include a method including applying the curable composition to at least one of the upper mold or the lower mold of the mold, curing the curable composition after closing the upper mold and the lower mold, and then separating the upper mold and the lower mold from each other.

As a method for applying the curable composition, a spray method, a spin coating method, and a screen printing method, or the like, can be used.

Curing of the curable composition is performed, for example, by emitting ultraviolet light in the case that a photocurable composition is used. A high-pressure mercury lamp, ultra-high pressure mercury lamp, carbon arc lamp, xenon lamp, metal halide lamp or the like is used as the light source when irradiation with ultraviolet light is performed. The exposure amount varies depending on the type of light source, the distance between the light source and the coated surface, and other conditions; however, the exposure amount is, for example, about 500 to 3000 mJ/cm². After the irradiation with the ultraviolet light, as necessary, heating (post curing) may be performed to promote the curing.

After curing the curable composition, the obtained cured product is separated from the mold to obtain the optical component. A silicone mold is preferably used as a mold from the perspective of that the optical component can be easily separated and prevented from being damaged during peeling.

### Example(s)

Hereinafter, the present invention will be described more specifically with reference to examples, however, the present invention is not limited by these examples.

### Preparation Example 1

SYLGARD184 Curing agent (containing a hydrosilyl group-containing polyorganosiloxane and a hydrosilylation catalyst, manufactured by Dow Corning Toray Co., Ltd) was added to SYLGARD184 (Vinyl group-containing polyorganosiloxane, available from Dow Corning Toray Co., Ltd.) and they were stirred, thereafter, the resultant was poured into a metal mold and cured at 100°C for 2 hours. Thereafter, the resultant was separated from the metal mold, and a silicone mold (the upper mold and the lower mold) was obtained having a vertical 10 row × lateral 10 row of inverted recesses of a lens (including a lens part and a peripheral part thereof, and including recognition marks in positions that are mutually plane-symmetrical on the front surface side and the rear surface side of the peripheral part).

### Example 1

The curable composition (the product name "CELVENUS OUH106", where it contains a cationic curable compound and a photocationic polymerization initiator; 80 wt.% of the total amount of the cationic curable compound is epoxy resin (including a polyfunctional alicyclic epoxy compound); viscosity at 25°C and at a shear rate of 20 (1/s): 0.2 Pa·s; breaking strain of the cured product (measured using a test piece 5B type in accordance with JIS-K7162: 1994): 0.8%; light transmittance of cured product (450 nm): 90% or greater; Tg of cured product: 100°C or greater; and it was manufactured by Daicel Corporation) was applied to the lower mold and the upper mold of the silicone mold obtained in Preparation Example 1, and after closing the upper mold and the lower mold using the recognition marks as a mark, UV irradiation (exposure amount: 3000 mJ/cm²) was performed, the molds was separated from each other, and an arrayed lens having a configuration in which the lenses are arranged in vertical 10 rows × lateral 10 rows, and these lenses are connected to each other with joints was obtained.

The obtained array lens was bonded to a support tape, and the joint was cut using a blade to obtain 100 individual products (including a lens part (diameter 3.5 mm) and a peripheral part thereof and including recognition marks on the front surface side and the rear surface side of the peripheral part) having a side length of 4 mm. With respect to the obtained 100 pieces, the positional shift between the recognition marks was visually observed, and the individual pieces in which the positional shift occurred were eliminated. The eliminated individual pieces were measured using eccentricity measuring machine (product name "NEXIV", available from Niconic Stec Co., Ltd.), and the eccentricity was recognized. In addition, an individual product in which the positional shift between the recognition marks was not occur was measured using the eccentricity measuring machine, and it was found that there was no eccentricity and optical characteristics were excellent. As described above, it was confirmed that the presence or absence of the eccentricity can be easily determined by observing the shift between in the recognition marks.

As a summary of the above, the configurations of the present invention and variations thereof are described below.
[1] An optical component including:
   an optical part and a peripheral part of the optical part, wherein
   the optical component includes recognition marks in positions substantially plane-symmetrical to each other on a front surface side and a rear surface side of the peripheral part, respectively, the recognition marks being expressed as a recess or a projection and configured to allow eccentricity to be recognized.
[2] The optical component according to [1], wherein two of the recognition marks on the front surface side and the rear surface side of the peripheral part are similar to each other in shape, and one of the recognition marks is from 10% to 90% a size of the other of recognition marks.
[3] The optical component according to [1] or [2], wherein the recognition marks have a circular shape or a polygonal shape in a plan view.
[4] The optical component according to any one of [1] to [3], wherein the optical part is a lens part.
[5] The optical component according to any one of [1] to [4], wherein a shape of the optical component in a plan view is rectangular, and a length of one side of the optical component is from 10 to 0.5 mm (preferably from 7 to 0.5 mm).
[6] The optical component according to any one of [1] to [5], wherein a shape of the optical part in a plan view is circular, and a diameter of the optical part is from 5 to 0.1 mm (preferably from 4 to 0.2 mm).
[7] The optical component according to any one of [1] to [6], wherein a thickness of the thickest part of the optical component is from 3 to 0.3 mm, and a thickness of the thinnest part is from 1.5 to 0.05 mm.
[8] The optical component according to any one of [1] to [7], wherein the optical component is an imaging lens, a light diffusion lens, or a prism.
[9] The optical component according to any one of [1] to [8], wherein the optical component is composed of a cured product of a cationic curable composition containing an epoxy resin.
[10] The optical component according to [9], wherein the cured product has a light transmittance of 70% or greater (preferably 80% or greater) at a wavelength of 450 nm in a case that a thickness is 100 µm.
[11] The optical component according to [9] or [10], wherein a breaking strain of the cured product measured by a method according to JIS-K7162:1994 is 0.1% or greater (preferably 0.3% or greater, and especially preferably 0.5% or greater).
[12] The optical component according to any one of [9] to [11], wherein a proportion of an epoxy resin in the total amount of a curable compound contained in a cationic curable composition is 50 wt.% or greater (preferably 60 wt.% or greater, especially preferably 70 wt.% or greater, and most preferably 80 wt.% or greater).
[13] The optical component according to any one of [9] to [12], wherein an epoxy resin is a compound including an alicyclic epoxy group.
[14] The optical component according to [13], wherein a proportion of a compound including an alicyclic epoxy group in the total amount of a curable compound contained in a cationic curable composition is 20 wt.% or greater (preferably 30 wt.% or greater, and especially preferably 40 wt.% or greater).
[15] The optical component according to any one of [9] to [12], wherein an epoxy resin is a polyfunctional alicyclic epoxy compound.
[16] The optical component according to any one of [9] to [12], wherein an epoxy resin is a compound represented by Formula (i).
[17] The optical component according to [16], wherein a proportion of a compound represented by Formula (i) in the total amount of a curable compound contained in a cationic curable composition is 10 wt.% or greater (preferably 15 wt.% or greater, and especially preferably 20 wt.% or greater).
[18] The optical component according to any one of [9] to [12], wherein an epoxy resin is at least one type of compound selected from the group consisting of 3,4-epoxycyclohexylmethyl(3,4-epoxy)cyclohexane carboxylate, (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
[19] The optical component according to any one of [9] to [12], wherein an epoxy resin is a compound represented by Formula (i), where X is a single bond or a linking group (however, except for a group containing an ester bond).
[20] The optical component according to [19], wherein a proportion of a compound represented by Formula (i) in the total amount of a curable compound contained in a cationic curable composition, where X is a single bond or a linking group (however, except for a group containing an ester bond), is 10 wt.% or greater (preferably 15 wt.% or greater, particularly preferably 20 wt.% or greater).
[21] The optical component according to any one of [9] to [12], wherein an epoxy resin is at least one type of compound selected from the group consisting of (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
[22] A method for manufacturing an optical component including:
   integrally molding a curable composition using a mold having a shape in which a recess or a projection of the following optical component is inverted; and sorting an optical component having eccentricity within a reference value from the optical components obtained by the integrally molding.
   The optical component includes an optical part and a peripheral part of the optical part, and includes recognition marks in positions plane-symmetrical to each other on a front surface side and a rear surface side of the peripheral part, respectively, the recognition marks being expressed as the recess or the projection.
[23] The method for manufacturing an optical component according to [22], wherein a curable composition is a cationic curable composition containing an epoxy resin.
[24] The method for manufacturing an optical component according to [22] or [23], wherein a curable composition forms a cured product having a light transmittance at a wavelength of 450 nm of 70% or greater (preferably, 80% or greater) in a case that a thickness is 100 µm.
[25] The method for manufacturing an optical component according to any one of [22] to [24], wherein a curable composition forms a cured product having a breaking strain of 0.1% or greater (preferably 0.3% or greater, and especially preferably 0.5% or greater), the breaking strain being measured by a method according to JIS-K7162:1994.
[26] The method for manufacturing an optical component according to any one of [23] to [25], wherein a proportion of an epoxy resin in the total amount of a curable compound contained in a cationic curable composition is 50 wt.% or greater (preferably 60 wt.% or greater, especially preferably 70 wt.% or greater, and most preferably 80 wt.% or greater).
[27] The method for manufacturing an optical component according to any one of [23] to [26], wherein an epoxy resin is a compound including an alicyclic epoxy group.
[28] The method for manufacturing an optical component according to [27], wherein a proportion of a compound having an alicyclic epoxy group in the total amount of a curable compound contained in a cationic curable composition is 20 wt.% or greater, (preferably 30 wt.% or greater, and especially preferably 40 wt.% or greater).
[29] The method for manufacturing an optical component according to any one of [23] to [26], wherein an epoxy resin is a polyfunctional alicyclic epoxy compound.
[30] The method for manufacturing an optical component according to [29], wherein a proportion of a polyfunctional alicyclic epoxy compound in the total amount of a curable compound contained in a cationic curable composition is 10 wt.% or greater (preferably 15 wt.% or greater, and especially preferably 20 wt.% or greater).
[31] The method for manufacturing an optical component according to any one of [23] to [26], wherein an epoxy resin is a compound represented by Formula (i).
[32] The method for manufacturing an optical component according to [31], wherein a proportion of a compound represented by Formula (i) in the total amount of a curable compound contained in a cationic curable composition is 10 wt.% or greater, (preferably 15 wt.% or greater, and especially preferably 20 wt.% or greater).
[33] The method for manufacturing an optical component according to [31] or [32], wherein a compound represented by Formula (i) is at least one type of compound selected from the group consisting of 3,4-epoxycyclohexylmethyl(3,4-epoxy)cyclohexane carboxylate, (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
[34] The method for manufacturing an optical component according to any one of [23] to [26], wherein an epoxy resin is a compound represented by Formula (i), where X is a single bond or a linking group (however, except for a group containing an ester bond).
[35] The method for manufacturing an optical component according to [34], wherein a proportion of a compound represented by Formula (i) in the total amount of a curable compound contained in a cationic curable composition, where X is a single bond or a linking group (however, except for a group containing an ester bond), is 10 wt.% or greater (preferably 15 wt.% or greater, and especially preferably 20 wt.% or greater).
[36] The method for manufacturing an optical component according to [34] or [35], wherein a compound represented by Formula (i), where X is a single bond or a linking group (however, except for a group containing an ester bond), is at least one type of compound selected from the group consisting of (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
[37] The method for manufacturing an optical component according to any one of [22] to [36], wherein a mold is a silicone mold.
[38] The method for manufacturing an optical component according to any one of [22] to [37], wherein an optical component is the optical component according to any one of [1] to [21].

### Industrial Applicability

The optical component of the present invention includes an optical part and a peripheral part thereof, and includes recognition marks on a front surface side and a rear surface side of the peripheral part. Moreover, it can be easily confirmed visually that these two recognition marks are in positions that are substantially plane-symmetrical, and thus it can be instantly recognized that the optical component has no eccentricity (or the eccentricity is within the standard value) and the optical characteristics are excellent.

Therefore, according to the present invention, the cost and time spent in the detection of the eccentricity of the optical component in the related art can be greatly reduced, and high quality optical components can be sorted and provided.

### Reference Signs List

1 Front surface side recognition mark
2 Rear surface side recognition mark
3 Optical part (especially, lens part)
4 Flange part
5 Frame part
6 Peripheral part

## Claims

1. An optical component comprising:
an optical part; and
a peripheral part of the optical part,
wherein the optical component includes recognition marks in positions substantially plane-symmetrical to each other on a front surface side and a rear surface side of the peripheral part, respectively, the recognition marks being expressed as a recess or a projection and configured to allow eccentricity to be recognized.

2. The optical component according to claim 1,
wherein two of the recognition marks on the front surface side and the rear surface side of the peripheral part are similar to each other in shape, and
one of the recognition marks is from 10% to 90% a size of the other of the recognition marks.

3. The optical component according to claim 1 or 2,
wherein the recognition marks have a circular shape or a polygonal shape in a plan view.

4. The optical component according to any one of claims 1 to 3,
wherein the optical part is a lens part.

5. The optical component according to any one of claims 1 to 4,
wherein the optical component is an imaging lens, a light diffusion lens, or a prism.

6. The optical component according to any one of claims 1 to 5,
wherein the optical component is composed of a cured product of a cationic curable composition containing an epoxy resin.

7. A method for manufacturing an optical component comprising:
integrally molding a curable composition using a mold having a shape in which a recess or a projection of the following optical component is inverted; and
sorting an optical component having eccentricity within a reference value from optical components obtained by the integrally molding,
wherein the optical component includes an optical part and a peripheral part of the optical part, and includes recognition marks in positions plane-symmetrical to each other on a front surface side and a rear surface side of the peripheral part, respectively, the recognition marks being expressed as the recess or the projection.
